# EUROPÄISCHE PATENTSCHRIFT

(11) **EP 2 686 570 B1**
(45) Veröffentlichungstag und Bekanntmachung des Hinweises auf die Patenterteilung: **17.12.2014**
(21) Anmeldenummer: 12712560.7
(22) Anmeldetag: 27.02.2012
(51) Int. Cl.: F16D 48/02, F16D 25/08

(54) **DÄMPFUNGSEINRICHTUNG**
DAMPING DEVICE
DISPOSITIF D'AMORTISSEMENT

(30) Priorität: 15.03.2011 DE 102011014002
(43) Veröffentlichungstag der Anmeldung: 22.01.2014
(73) Patentinhaber: Schaeffler Technologies GmbH & Co. KG, 91074 Herzogenaurach (DE)
(72) Erfinder: BERTHELEMY, Pierre-Yves, 67460 Souffelweyersheim (FR)
(86) Internationale Anmeldenummer: PCT/DE2012/000175
(87) Internationale Veröffentlichungsnummer: WO 2012/122960

(56) Entgegenhaltungen:
- WO-A1-2011/072635
- DE-A1- 1 475 701
- DE-A1-102006 017 694
- JP-A- 2 236 094
- US-A- 2 630 833
- US-A- 3 018 799

## Beschreibung

Die Erfindung betrifft eine Einrichtung zur Dämpfung/Tilgung von unerwünschten Druckschwingungen in einer hydraulischen Strecke zur Kupplungsbetätigung eines Kraftfahrzeuges mit den Merkmalen des Oberbegriffs des Anspruchs 1.

Druckschwingungen, die beispielsweise in einer hydraulischen Strecke für eine Kupplungsbetätigung eines Kraftfahrzeuges auftreten, werden vom Verbrennungsmotor dieses Kraftfahrzeuges auf die Kupplung übertragen. Von dieser ausgehend werden die Schwingungen über das Ausrücksystem bis hin zum Ausrückpedal bzw. Kupplungspedal weiter geleitet und kommen dort ggf. sogar vergrößert an.

Zur Reduzierung der Schwingungsamplituden der übertragenen Schwingungen werden Schwingungstilger verwendet, die nach dem Prinzip eines Helmholtz-Resonators arbeiten und eine Schwingung in einem bestimmten Frequenzbereich um die Resonanzfrequenz herum dämpfen.

Aus der DE 10 2008 003 991 A1 ist eine Lösung zur Unterdrückung von Eigenresonanzen in einer hydraulischen Strecke zur Kupplungsbetätigung eines Fahrzeuges bekannt, bei der ein besonders ausgestalteter Helmholtz-Resonator verwendet wird. Dieser besteht aus einem Leitungsstück, das mit einem von diesem abzweigenden Behälter verbunden ist. Die aus einem T-Stück gebildete Verzweigung ermöglicht, den Helmholtz-Resonator mit dem Ausrücksystem zu verknüpfen. Das Ausrücksystem besteht bekanntermaßen im Wesentlichen aus einem Geber- und einem Nehmerzylinder, die mittels einer Druckleitung miteinander verbunden sind. Die Druckleitung ist ihrem Volumen entsprechend mit Hydraulikfluid befüllt, und fungiert als Speicher für die kinetische Energie. Der als Druckspeicher fungierende Behälter hat die Funktion eines federnden Elements mit einer bestimmten hydraulischen Kapazität. Er speichert damit die potentielle Energie. Die Abmessungen der Druckleitung und die hydraulische Kapazität des Behälters sollen nach der erfinderischen Lösung so abgestimmt werden, dass die Eigenfrequenz des Helmholtz-Resonators der zu filternden Frequenz im Ausrücksystem entspricht.

Diese Helmholtz-Resonatoren können sehr effektiv ein bestimmtes Frequenzband filtern. Die Bandbreite des Filters steigt dabei mit der Kapazität des Behälters. Dies hat allerdings den Nachteil, dass die Anregung in der hydraulischen Strecke relativ breitbandig ist. Aus diesem Grunde soll die Kapazität und damit auch die Größe des Bauraumes des Behälters relativ groß gewählt werden.

Allerdings ist die konstruktive Realisierung eines solchen Mehrfachtilgers sehr aufwendig und benötigt zudem einen entsprechend großen Bauraum.

Aus der DE 10 2006 017 694 A1 ist eine Einrichtung zur Dämpfung/Tilgung von unerwünschten Druckschwingungen gemäß dem Oberbegriff des Anspruchs 1 bekannt.

Ferner ist in der älteren, aber nicht vorveröffentlichten WO 2011/072635 A1 eine Einrichtung zur Dämpfung/Tilgung von unerwünschten Druckschwingungen in einer hydraulischen Strecke zur Kupplungsbetätigung eines Kraftfahrzeuges offenbart, umfassend einen Geberzylinder und einen Nehmerzylinder, die über eine von einem Fluid durchströmte Druckleitung hydraulisch miteinander verbunden sind, mit einem auf der Basis eines Helmholtz-Resonators arbeitenden, als Tilger ausgebildeten, hohlzylindrischen Gehäuse mit einer zentrischen Durchgangsbohrung und mindestens einem parallel zu dieser in der Wandung des Gehäuses verlaufenden, eine Breite aufweisenden Kanal, wobei die Öffnung des Gehäuses mit einem Deckel verschlossen ist, wobei im Gehäuse ein Einsatz angeordnet ist, der mit mindestens einem Kanal in der Wandung des Gehäuses in Wirkverbindung steht, und der hohlzylindrisch mit einem endseitigen Boden ausgebildet ist, von dem aus sich die in einzelne Seitenflächen aufteilbare Zylinderfläche erstreckt, wobei die Zylinderfläche durch mindestens einen bis zum Boden reichenden Schlitz in zwei zueinander beabstandete Seitenflächen teilbar ist, und wobei der Einsatz beabstandet zum Boden einen Zwischenboden aufweist.

Die Aufgabe der Erfindung besteht darin, eine Dämpfungseinrichtung für eine hydraulische Strecke zur Kupplungsbetätigung zu schaffen, die einfach aufgebaut ist, einen geringen Bauraum benötigt, und die für mehrere Tilgungsfrequenzen getrennt ausgelegt ist.

Diese Aufgabe wird mit einer Einrichtung zur Dämpfung/Tilgung von unerwünschten Druckschwingungen mit den Merkmalen des Anspruchs 1 gelöst. Vorteilhafte Ausgestaltungen der Erfindung ergeben sich aus den Unteransprüchen.

Danach umfasst die Einrichtung zur Dämpfung/Tilgung von unerwünschten Druckschwingungen in einer hydraulischen Strecke zur Kupplungsbetätigung eines Kraftfahrzeuges einen Geberzylinder und einen Nehmerzylinder, die über eine von einem Fluid durchströmte Druckleitung hydraulisch miteinander verbunden sind. Die Dämpfungseinrichtung weist ein auf der Basis eines Helmholtz-Resonators arbeitendes als Tilger ausgebildetes hohlzylindrisches Gehäuse mit einer zentrischen Durchgangsbohrung auf. Parallel zu dieser Durchgangsbohrung verläuft in der Wandung des Gehäuses mindestens ein Kanal mit einer entsprechenden Breite. Die Öffnung des Gehäuses ist mit einem Deckel verschlossen. Erfindungsgemäß ist im Gehäuse ein Einsatz angeordnet, der mit mindestens einem Kanal in der Wandung in Wirkverbindung steht.

Der als Verschluss der Öffnung des Gehäuses dienende Deckel kann endseitig als Stecker oder als Hülse ausgeführt sein. Ebenso kann das Gehäuse endseitig als Hülse oder als Stecker ausgebildet sein. Gehäuse und Deckel sind dabei dichtend miteinander verbunden. Auf diese Weise ist eine Dämpfungseinrichtung in die hydraulische Strecke integrierbar.

Der Einsatz ist hohlzylindrisch mit endseitigem Boden ausgebildet, von dem aus sich die in einzelne Seitenflächen aufteilbare Zylinderfläche erstreckt.

Die Zylinderfläche ist durch mindestens einen bis zum Boden des Einsatzes reichenden Schlitz in zwei zueinander beabstandete Seitenflächen teilbar.

Der Einsatz weist beabstandet zum Boden einen Zwischenboden auf, der im Bereich des mindestens einen Schlitzes mit einer Nut versehen ist.

Außerdem ist es vorteilhaft, dass die Seitenflächen des Einsatzes eine Dicke aufweisen, die an die Breite der Kanäle in der Wandung des Gehäuses angepasst ist. Durch die Herstellung einer Verbindung der Seitenflächen des Einsatzes mit den Kanälen in der Gehäusewandung werden mehrere parallel zueinander verlaufende Tilger erzeugt.

Zur Gewährsleitung des Einbringens von Hydraulikfluid in die einzelnen Tilger und deren Entlüftung ist es vorteilhaft, dass beidseitig zu jedem Schlitz in den Seitenflächen des Einsatzes und parallel zum Verlauf des Schlitzes eine Nut in den Seitenflächen vorgesehen ist und diese jeweils endseitig einen den Durchmesser des Einsatzes verringernden Absatz aufweisen.

Zur Ermöglichung der Tilgung unterschiedlicher Frequenzbereiche ist es besonders vorteilhaft, dass in der Wandung des Gehäuses eine gerade oder ungerade Anzahl an Kanälen eingebracht ist, die je nach Frequenzbereich, in bogenförmiger Richtung gleich oder ungleich lang ausgebildet sind.

Zur Realisierung autarker Tilger im Gehäuse ist es vorteilhaft, dass die einzelnen Kanäle durch Stege voneinander getrennt sind.

Weiter ist es zur Realisierung der Entlüftung der Dämpfungseinrichtung vorteilhaft, dass die Nuten so in die Seitenflächen des Einsatzes eingebracht sind, dass diese innerhalb der Dämpfungseinrichtung an höchster Stelle positioniert sind.

Die Erfindung wird nachfolgend anhand eines Ausführungsbeispiels und zughöriger Zeichnungen näher erläutert.

Es zeigen:
- Figur 1: einen Teilschnitt einer perspektivisch dargestellten Dämpfungseinrichtung;
- Figur 2: das Gehäuse als Einzelteil der Dämpfungseinrichtung gemäß Figur 1;
- Figur 2a: die Draufsicht auf das Gehäuse gemäß Figur 2;
- Figur 3: den in das Gehäuse der Dämpfungseinrichtung eingesetzten Einsatz als Einzelteil aus Figur 1;
- Figur 4: einen Schnitt durch die Dämpfungseinrichtung aus Figur 1 entlang der Linie A-A;
- Figur 5: eine andere Möglichkeit der Ausgestaltung der Dämpfungseinrichtung gemäß Figur 1, dargestellt durch einen Schnitt entlang der Linie A-A;
- Figur 6: eine weitere Möglichkeit der Ausgestaltung der Dämpfungseinrichtung gemäß Figur 1, dargestellt durch einen Schnitt entlang der Linie A-A.

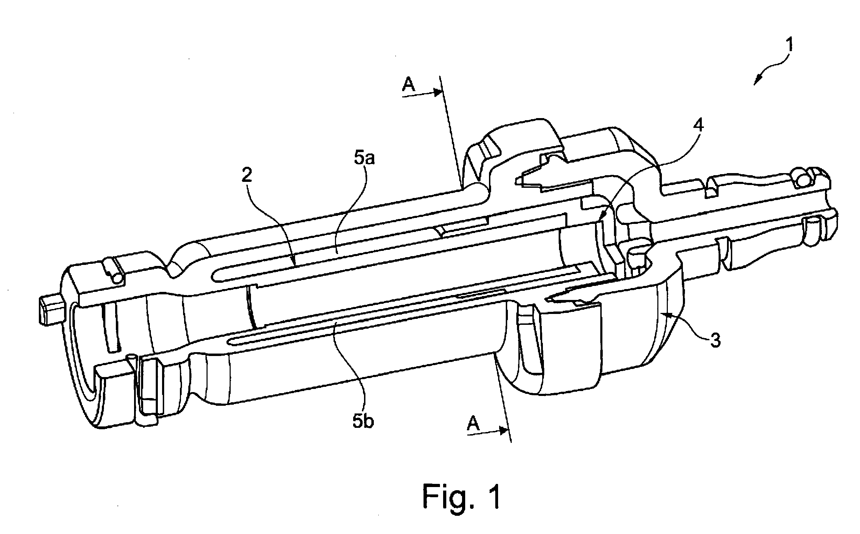

Figur 1 zeigt eine zum Teil geschnittene Dämpfungseinrichtung 1 in einer perspektivischen Darstellung. Diese Dämpfungseinrichtung 1 besteht im Wesentlichen aus einem hohlzylindrischen Gehäuse 2, das mit einem Deckel 3 vorzugsweise reibverschweißt dichtend verbunden ist und einem im Gehäuse 2 angeordneten hohlzylindrischen Einsatz 4. Alle Teile bestehen zur Senkung der Herstellungskosten aus Kunststoff. Zur Herstellung einer Anbindung innerhalb der hydraulischen Strecke, beispielsweise zum Einsatz in die Hydraulikleitung, ist der Deckel 4 in dieser Ausführung endseitig als Steckerteil und das Gehäuse 2 endseitig als Hülse ausgebildet. Aus diesem Teilschnitt sind in dieser Ausführung der Dämpfungseinrichtung 1 zwei kammerförmige ringförmige Kanäle 5a, 5b mit einer Breite a ersichtlich, die nahezu über die gesamte Länge in die Dicke der Wandung des Gehäuses 2 eingebracht sind. Endseitig des Gehäuses 2, im Verbindungsbereich zum Deckel 3, ist der Einsatz 4 eingesetzt, dessen Zylinderwände/Seitenflächen in die Kanäle 5a, 5b hineinreichen.

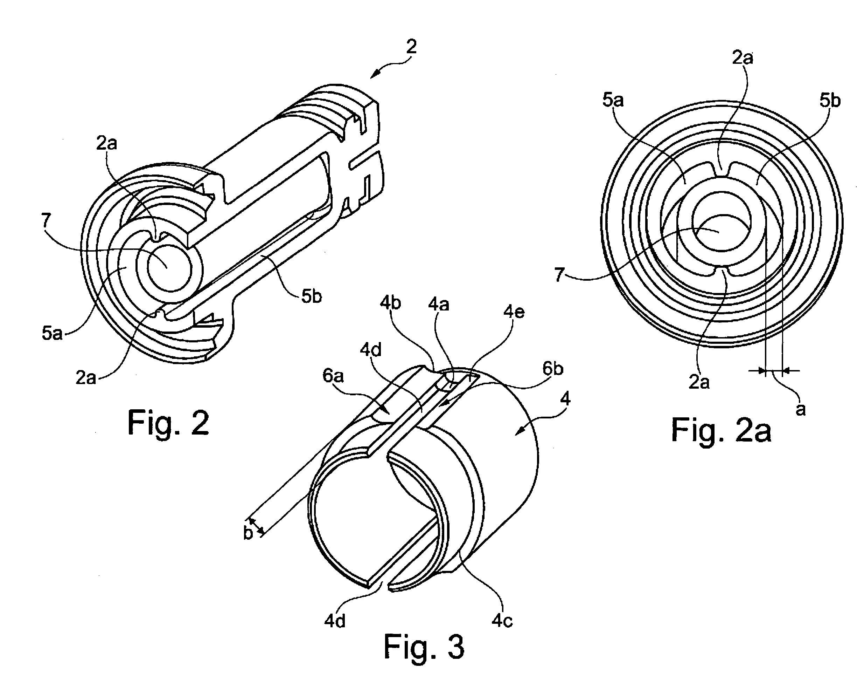

In Figur 2 ist das Gehäuse 2 als Einzelteil im Teilschnitt dargestellt. Aus dieser perspektivischen Ansicht des Gehäuses 2 sind die beiden in die Dicke der Wandung eingebrachten Kanäle 5a, 5b erkennbar, die durch Stege 2a voneinander getrennt sind. Die Form der Kanäle 5a, 5b ist dabei sowohl an die Außenkontur als auch an die innere hohlzylindrische Kontur des Gehäuses 2 angepasst. Die verbleibende Innenwand der Kanäle 5a, 5b bildet die Wandung für eine Durchgangbohrung 7, die das Gehäuse 2 und den Deckel 4 durchzieht, wobei ihr Durchmesser im Deckel 4 verringert ist.

Figur 2a zeigt das Gehäuse 2 in einer Draufsicht. Hieraus sind die beiden benachbart angeordneten gleich großen Kanäle 5a, 5b ersichtlich, die durch die Stege 2a zueinander beabstandet sind. Weiter ist hieraus die Durchgangbohrung 7 ersichtlich.

In Figur 3 ist der Einsatz 4 aus Figur 1 als Einzelteil in einer perspektivischen Ansicht dargestellt. Dieser hohlzylindrische Einsatz 4 weist endseitig einen Boden 4a auf, von dem aus sich die Seitenflächen, die durch zwei bis zum Boden 4a reichende Schlitze 4d voneinander beabstandet sind. Beabstandet zum Boden 4a ist ein Zwischenboden 4b im Einsatz 4 angeordnet, der im Bereich der Schlitze 4d jeweils eine Nut 4e aufweist. Die Dicke b der Seitenflächen des Einsatzes 4 ist an die Breite a der Kanäle des Gehäuses 2 angepasst. Beidseitig zu jedem Schlitz 4d ist parallel zu dessen Verlauf eine Nut 6a, 6b vorgesehen. Endseitig weisen die Seitenflächen des Einsatzes 4 einen Absatz 4c auf. Dadurch, dass das Gehäuse 2 im Innern mit zwei Kanälen 5a, 5b versehen ist, in die die dazu komplementär gestalteten Seitenflächen des Einsatzes 4 eingreifen, wird auf diese Weise eine Verdrehsicherung für den Einsatz 4 im Gehäuse 2 realisiert. Die im Einsatz 4 vorgesehenen Nuten 4a fungieren als Führung für die Stege 2a, und der Boden 4a als Anschlag des Einsatzes 4 am Gehäuse 2. Über die beiden Nuten 6a, 6b wird eine Verbindung für das durch die Durchgangsbohrung 7 hindurch fließende Hydraulikfluid zu den Kanälen 5a, 5b gewährleistet, dass dadurch, ausgehend vom Boden 4a, in die Kanäle 5a, 5b eindringen kann, worüber auch gleichzeitig die Entlüftung dieser Kanäle 5a, 5b sicher gestellt wird. Das sich im Gehäuse 2 befindende Volumen an Hydraulikfluid wird in die Kanäle 5a, 5b entsprechend verteilt. Durch die Anpassung der Länge und die Auswahl der Elastizität des Werkstoffes des Gehäuses 2 wird die gewünschte Steifigkeit des Gehäuses 2 im Bereich der Kanäle 5a, 5b erzielt. Durch das Einbringen von zwei parallel zueinander verlaufenden, als Tilger fungierenden Kanälen 5a, 5b in das Gehäuse 2, ist es möglich, dass sich die Wandungen dieser Kanäle 5a, 5b getrennt voneinander verformen, wodurch die beiden Tilger unabhängig voneinander arbeiten können.

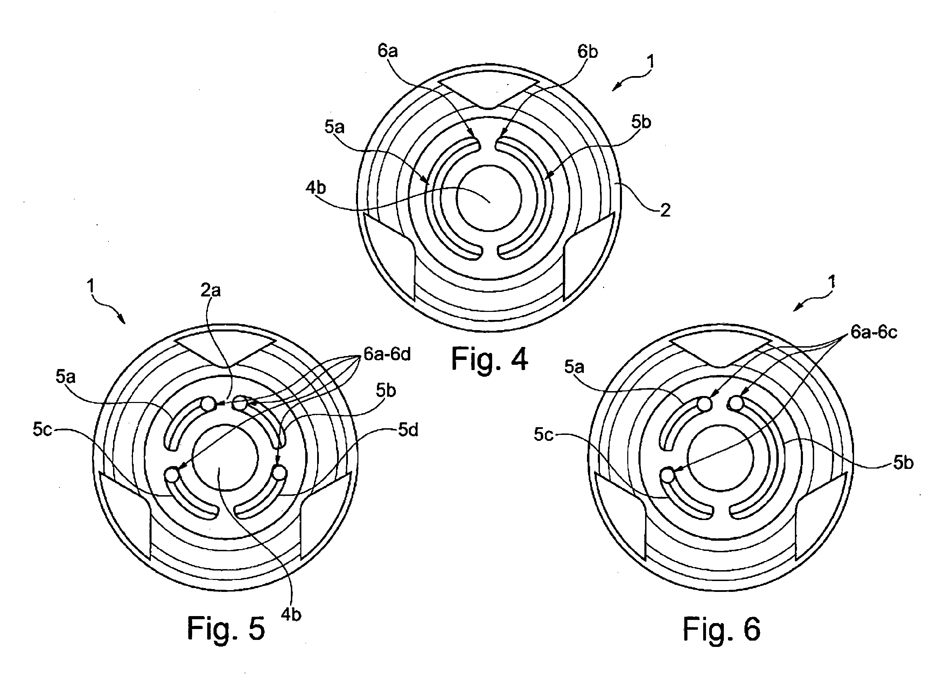

In Figur 4 ist ein Schnitt durch die erste Ausführung der Dämpfungseinrichtung 1 gemäß Figur 1 entlang der Linie A-A dargestellt. Aus dieser sind das Gehäuse 2 und der in dieses eingesetzte Einsatz 4 ersichtlich, wobei vom Einsatz 4 der Zwischenboden 4b und die in den Kanälen 5a, 5b ausgenommen Seitenflächen erkennbar sind. Außerdem sind die Kanäle 6a, 6b des Einsatzes 4 für die Entlüftung und Zufuhr von Hydraulikfluid sichtbar.

Figur 5 zeigt anhand des Schnittes entlang der Linie A-A gemäß Figur 1 durch die Dämpfungseinrichtung 1, dass diese eine andere konstruktive Ausführung aufweist. Anstelle von zwei in der Gehäusewandung gegenüber liegend angeordneten Kanälen 5a, 5b wie in Figur 3, sind in dieser Ausführung vier Kanäle 5a bis 5d in die Gehäusewandung eingebracht, die in diesem Falle alle die gleiche bogenförmige Länge aufweisen und durch entsprechend breite Stege 2a umfangsmäßig voneinander getrennt sind. Diese vier Kanäle 5a bis 5d sind mit den entsprechend aufgeteilten zylinderförmigen Seitenflächen des Einsatzes 4 ausgefüllt, wobei außerdem die Nuten 6a bis 6d erkennbar sind, die zur Gewährleistung einer guten Entlüftung der Kanäle 5a bis 5d jeweils an deren höchster Stelle angeordnet sind, wodurch gleichzeitig die Platzierung zur Einbringung der Nuten 6a bis 6d an den Seitenflächen des Einsatzes 4 vorgegeben wird.

Figur 6 stellt ebenfalls einen Schnitt entlang der Linie A-A der Dämpfungseinrichtung 1 aus Figur 1 dar, wobei diese wiederum eine andere Konstruktion aufweist. Im Gegensatz zu dem in den Figuren 4 und 5 beschriebenen Aufbau der Dämpfungseinrichtung 1, bei der die Kanäle in der Wandung des Gehäuses 2 immer eine gerade Zahl aufwiesen, wird in dieser Figur 6 gezeigt, dass auch die Einbringung einer ungeraden Zahl an Kanälen in die Wandung des Gehäuses 2 möglich ist, die auch noch eine unterschiedliche Länge in Bogenrichtung aufweisen können. Somit wird in dieser Figur gezeigt, dass zwei in Bogenrichtung kurze Kanäle 5a, 5c und ein längerer Kanal 5b in der Dämpfungseinrichtung 1 angeordnet sind, die von den Seitenflächen des Einsatzes 4 ausgefüllt sind. Durch diese Anordnung werden eine mittlere und zwei hohe Tilgungsfrequenzen realisiert. Außerdem sind wiederum, wie in den beiden voran gegangenen Figuren 4 und 5, die an der jeweils höchsten Stelle in die Seitenflächen eingebrachten Nuten 6a bis 6c zur Zuleitung von Hydraulikfluid erkennbar.

Allerdings wird mit steigernder Anzahl an Kanälen die Volumenaufnahme pro Tilger immer kleiner. Eine optimierte Frequenzabstimmung wird mit vier Kanälen erreicht.

Wie in Figur 6 dargestellt, besteht auch die Möglichkeit, das Gehäuse 2 mit einer ungeraden Anzahl von Kanälen und gleichzeitig unsymmetrisch zu gestalten, um somit verschiedene Steifigkeiten im Gehäuse 2 zu erzeugen.

Alle Konstruktionsvarianten der Dämpfungseinrichtung 1 können zusätzlich mit einem Schalldämpfer kombiniert werden. Der Vorteil wäre der, dass lediglich die Tilgungsfrequenzen für die Hauptresonanzen im System auszulegen sind, wobei zusätzlich die Schwingungen in anderen Bereichen der hydraulischen Strecke gedämpft würden.

## Patentansprüche

1. Einrichtung (1) zur Dämpfung/Tilgung von unerwünschten Druckschwingungen in einer hydraulischen Strecke zur Kupplungsbetätigung eines Kraftfahrzeuges, umfassend einen Geberzylinder und einen Nehmerzylinder, die über eine von einem Fluid durchströmte Druckleitung hydraulisch miteinander verbunden sind, mit einem auf der Basis eines Helmholtz-Resonators arbeitenden, als Tilger ausgebildeten, hohlzylindrischen Gehäuse (2) mit einer zentrischen Durchgangsbohrung (7) und mindestens einem parallel zu dieser in der Wandung des Gehäuses (2) verlaufenden, eine Breite (a) aufweisenden Kanal (5a bis 5d), wobei die Öffnung des Gehäuses (2) mit einem Deckel (3) verschlossen ist, **dadurch gekennzeichnet, dass** im Gehäuse (2) ein Einsatz (4) angeordnet ist, der mit mindestens einem Kanal (5a bis 5d) in der Wandung des Gehäuses (2) in Wirkverbindung steht, und der hohlzylindrisch mit einem endseitigen Boden (4a) ausgebildet ist, von dem aus sich die in einzelne Seitenflächen aufteilbare Zylinderfläche erstreckt, wobei die Zylinderfläche durch mindestens einen bis zum Boden (4a) reichenden Schlitz (4d) in zwei zueinander beabstandete Seitenflächen teilbar ist, wobei der Einsatz (4) beabstandet zum Boden (4a) einen Zwischenboden (4b) aufweist, und der Zwischenboden (4b) im Bereich des mindestens einen Schlitzes (4d) mit einer Nut (4e) versehen ist.

2. Dämpfungseinrichtung (1) nach Anspruch 1, **dadurch gekennzeichnet, dass** die Seitenflächen des Einsatzes (4) eine Dicke (b) aufweisen, die an die Breite (a) der Kanäle (5a-5d) in der Wandung des Gehäuses (2) angepasst ist.

3. Dämpfungseinrichtung (1) nach Anspruch 1 oder 2, **dadurch gekennzeichnet, dass** beidseitig zu jedem Schlitz (4d) in den Seitenflächen des Einsatzes (4) und parallel zum Verlauf des Schlitzes (4d) eine Nut (6a-6d) in den Seitenflächen vorgesehen ist und diese jeweils endseitig einen den Durchmesser des Einsatzes (4) vermindernden Absatz (4c) aufweist.

4. Dämpfungseinrichtung (1), nach einem der Ansprüche 1 bis 3, **dadurch gekennzeichnet, dass** in der Wandung des Gehäuses (2) eine gerade oder ungerade Anzahl an Kanälen (5a-5d) eingebracht ist, die in bogenförmiger Richtung gleich oder ungleich lang sein können.

5. Dämpfungseinrichtung (1) nach einem der Ansprüche 1 bis 4, **dadurch gekennzeichnet, dass** die Kanäle (5a-5d) durch Stege (2a) voneinander getrennt sind.

6. Dämpfungseinrichtung (1) nach einem der Ansprüche 1 bis 5, **dadurch gekennzeichnet, dass** die Nuten (6a-6d) so in die Seitenflächen des Einsatzes (4) eingebracht sind, dass diese innerhalb der Dämpfungseinrichtung (1) an höchster Stelle positioniert sind.

## Claims

1. Device (1) for the damping/absorption of undesirable pressure vibrations in a hydraulic track for the actuation of the clutch of a motor vehicle, comprising a master cylinder and a slave cylinder which are connected hydraulically to one another via a pressure line through which a fluid flows, with a hollow-cylindrical housing (2) which operates on the basis of a Helmholtz resonator and is designed as an absorber and which has a central through-bore (7) and at least one duct (5a to 5d) running parallel to the latter in the wall of the housing (2) and having a width (a), the orifice of the housing (2) being closed by means of a cover (3), **characterized in that** the housing (2) has arranged in it an insert (4) which is operatively connected to at least one duct (5a to 5d) in the wall of the housing (2) and which is formed hollow-cylindrically with an end-face bottom (4a), from which extends the cylinder surface divisible into individual side faces, the cylinder surface being divisible, by means of at least one slot (4d) reaching as far as the bottom (4a), into two side faces spaced apart from one another, the insert (4) having, spaced apart from the bottom (4a), an intermediate bottom (4b), and the intermediate bottom (4b) being provided with a groove (4e) in the region of the at least one slot (4d).

2. Damping device (1) according to Claim 1, **characterized in that** the side faces of the insert (4) have a thickness (b) which is adapted to the width (a) of the ducts (5a-5d) in the wall of the housing (2).

3. Damping device (1) according to Claim 1 or 2, **characterized in that**, in the side faces of the insert (4), a groove (6a-6d) is provided in the side faces on both sides of each slot (4d) and parallel to the run of the slot (4d) and has in each case on the end face a step (4c) reducing the diameter of the insert (4).

4. Damping device (1) according to one of Claims 1 to 3, **characterized in that** an even or odd number of ducts (5a-5d), which may be of equal or unequal length in the arcuate direction, are introduced in the wall of the housing (2).

5. Damping device (1) according to one of Claims 1 to 4, **characterized in that** the ducts (5a-5d) are separated from one another by webs (2a).

6. Damping device (1) according to one of Claims 1 to 5, **characterized in that** the grooves (6a-6d) are introduced into the side faces of the insert (4) such that they are positioned at the highest point inside the damping device (1).

## Revendications

1. Dispositif (1) pour l'amortissement d'oscillations de pression indésirables dans une section hydraulique pour la commande d'embrayage d'un véhicule automobile, comprenant un maître-cylindre et un cylindre récepteur qui sont connectés l'un à l'autre hydrauliquement par le biais d'une conduite de pression parcourue par un fluide, avec un boîtier cylindrique creux (2) réalisé sous forme d'amortisseur, fonctionnant sur la base d'un résonateur de Helmholtz, avec un alésage traversant central (7) et au moins un canal (5a à 5d) de largeur (a) s'étendant parallèlement à l'alésage traversant dans la paroi du boîtier (2), l'ouverture du boîtier (2) étant fermée par un couvercle (3), **caractérisé en ce qu'**un insert (4) est disposé dans le boîtier (2), lequel est en liaison fonctionnelle avec au moins un canal (5a à 5d) dans la paroi du boîtier (2) et est réalisé de manière cylindrique creuse avec un fond du côté de l'extrémité (4a), depuis lequel s'étend la surface cylindrique pouvant être divisée en surfaces latérales individuelles, la surface cylindrique pouvant être divisée en deux surfaces latérales espacées l'une de l'autre par au moins une fente (4d) s'étendant jusqu'au fond (4a), l'insert (4) présentant à distance du fond (4a) un fond intermédiaire (4b) et le fond intermédiaire (4b) étant pourvu d'une rainure (4e) dans la région de l'au moins une fente (4d).

2. Dispositif d'amortissement (1) selon la revendication 1, **caractérisé en ce que** les surfaces latérales de l'insert (4) présentent une épaisseur (b) qui est adaptée à la largeur (a) des canaux (5a à 5d) dans la paroi du boîtier (2).

3. Dispositif d'amortissement (1) selon la revendication 1 ou 2, **caractérisé en ce que** de chaque côté de chaque fente (4d) dans les surfaces latérales de l'insert (4) et parallèlement à l'étendue de la fente (4d) dans les surfaces latérales est prévue une rainure (6a-6d) et celle-ci présente à chaque fois du côté de l'extrémité un épaulement (4c) réduisant le diamètre de l'insert (4).

4. Dispositif d'amortissement (1) selon l'une quelconque des revendications 1 à 3, **caractérisé en ce que** dans la paroi du boîtier (2) est pratiqué un nombre pair ou impair de canaux (5a-5d) qui peuvent être de même longueur ou de longueurs différentes dans la direction courbe.

5. Dispositif d'amortissement (1) selon l'une quelconque des revendications 1 à 4, **caractérisé en ce que** les canaux (5a-5d) sont séparés les uns des autres par des nervures (2a).

6. Dispositif d'amortissement (1) selon l'une quelconque des revendications 1 à 5, **caractérisé en ce que** les rainures (6a-6d) sont pratiquées dans les surfaces latérales de l'insert (4) de telle sorte qu'elles soient positionnées à l'emplacement le plus haut à l'intérieur du dispositif d'amortissement (1).
